# EUROPEAN PATENT SPECIFICATION

(11) **EP 0 989 571 B1**
(45) Date of publication and mention of the grant of the patent: **11.04.2007**
(21) Application number: 99901135.6
(22) Date of filing: 22.01.1999
(51) Int. Cl.: H01G 9/008, H01G 9/04, H01G 9/00, H01M 4/02

(54) **METAL ELECTRODE MATERIAL, CAPACITOR USING METAL ELECTRODE MATERIAL, AND METHOD OF MANUFACTURE**
METALLISCHES ELEKTRODENMATERIAL, DIESES VERWENDENDER KONDENSATOR UND HERSTELLUNGSVERFAHREN
MATERIAU METALLIQUE POUR ELECTRODE , CONDENSATEUR UTILISANT LEDIT MATERIAU ET PROCEDE DE FABRICATION ASSOCIE

(30) Priority: 23.01.1998 JP 1107798; 23.01.1998 JP 1107898
(43) Date of publication of application: 29.03.2000
(73) Proprietor: MATSUSHITA ELECTRIC INDUSTRIAL CO., LTD., Kadoma-shi, Osaka 571-8501 (JP)
(72) Inventor: NONAKA, Seiji, Osaka 567-0867 (JP); TANAHASHI, Masakazu, Osaka-shi, Osaka 545-0035 (JP)
(74) Representative: Eisenführ, Speiser & Partner
(86) International application number: PCT/JP1999/000228
(87) International publication number: WO 1999/038177

(56) References cited:
- EP-A- 0 449 145
- JP-A- 1 009 611
- JP-A- 2 186 615
- JP-A- 6 342 739
- JP-A- 7 320 987
- JP-A- 9 134 726
- JP-A- 52 026 466
- JP-A- 60 235 419
- JP-U- 3 073 426
- PATENT ABSTRACTS OF JAPAN vol. 1995, no. 11, 26 December 1995 (1995-12-26) -& JP 07 226206 A (JAPAN STORAGE BATTERY CO LTD), 22 August 1995 (1995-08-22)

## Description

### FIELD OF THE INVENTION

The present invention relates to an electrode metal material for electrical components, such as batteries and capacitors, used in contact with electrolyte, to a capacitor formed of the electrode metal material, and to a method of producing the electrode metal material and the capacitor thereof.

### PRIOR ART

At present, there are, for example, electric double-layer capacitors and electrolytic capacitors available as electrical components which are used in contact with electrolyte. Such electric double-layer capacitors have been applied to large-capacitance capacitors chargeable at up to about 3 V, and used for backup power sources of microcomputers, memory devices, timers, and the like.

Typically, an electric double-layer capacitor comprises a pair of polarizable electrodes or double-layer electrodes disposed face-to-face via an insulating separator therebetween and immersed in electrolyte. The electrode is produced by applying an activated carbon layer on the surface of an electrode metal material made of a valve metal and used as a mechanical supporter and, at the same time, electric collector.

Some types of electric double-layer capacitors use an organic-solvent based electrolytic solution as electrolyte, such as a tetraethyl ammonium salt which is added to an organic solvent, such as propylene carbonate. Examples of conventional electric double-layer capacitors using organic-solvent based electrolyte include a type in which a pair of electric double-layer electrodes is wound and enclosed in a container, and another type in which a pair of double-layer electrodes is laminated or stacked, both types having been disclosed in U.S. Patent No. 5,150,283.

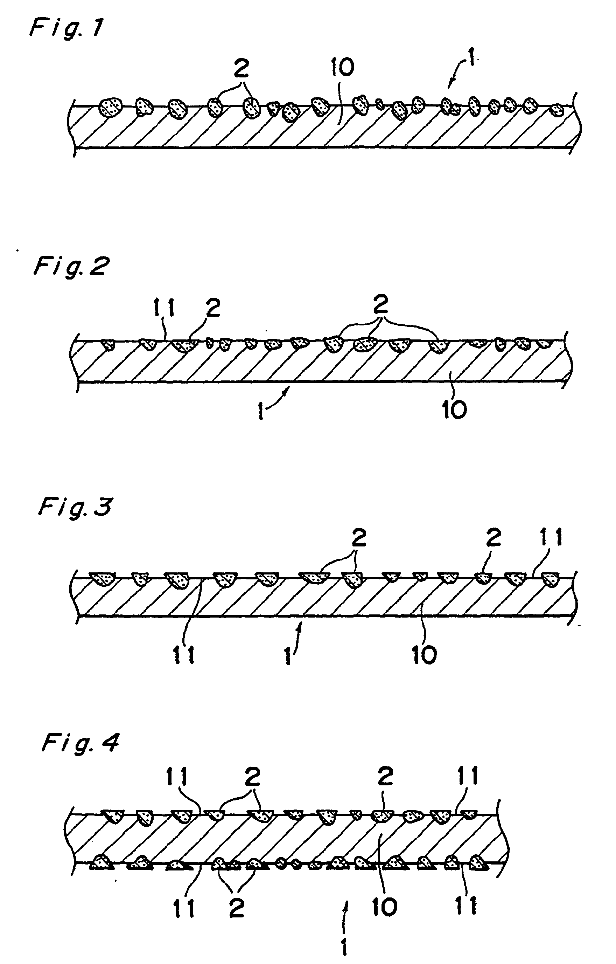

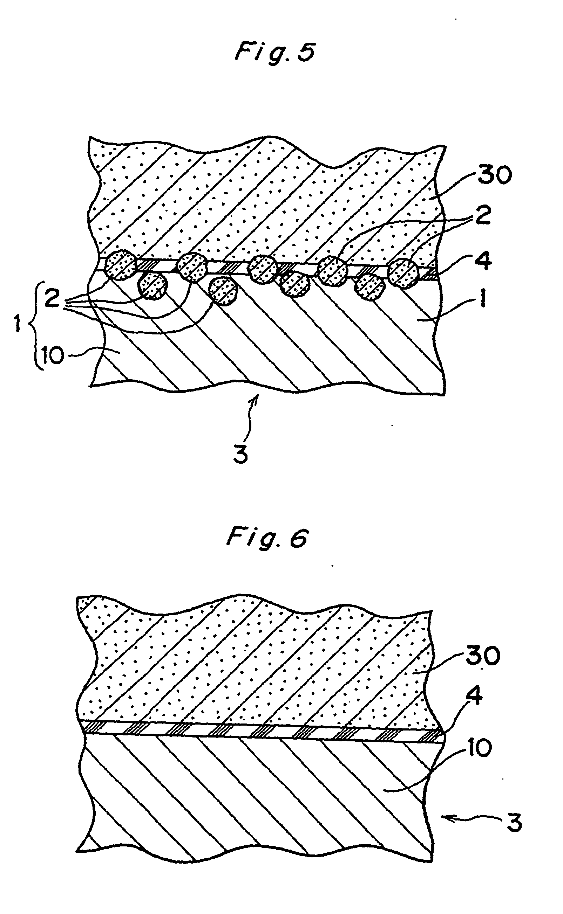

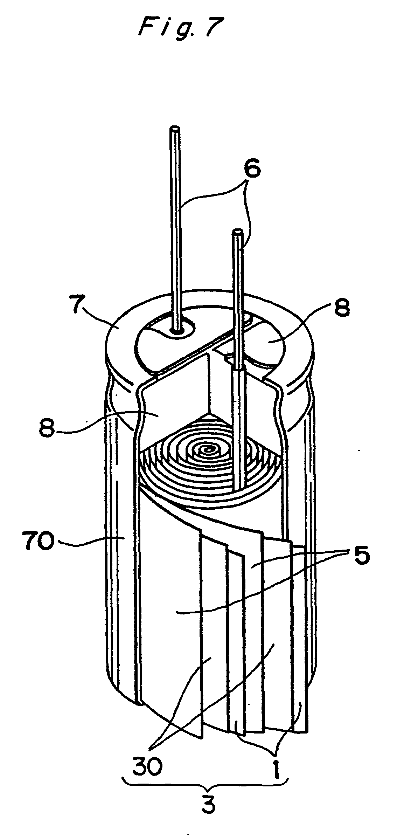

In the case of the winding type, an electrode metal material 1 is formed of etched aluminum foil having a thickness of 20 to 50 µm as shown in Fig. 7. Furthermore, a paste obtained from a powder mixture of activated carbon particles, a desired binder and a desired conductive agent is applied to the above-mentioned metal foil to form a film. This film, that is, an activated carbon layer 30 (a polarizable electrode) mainly consisting of activated carbon particles, is used to form an electric double-layer electrode 3.

A lead 6 is connected to each of the electrode metal materials 1 of the pair of electric double-layer electrodes 3 and 3, respectively. These electrodes 3 and 3 are disposed face-to-face with a separator 5 therebetween and wound like a coil. The electric double-layer electrodes is immersed in nonaqueous electrolyte under vacuum to impregnate the activated carbon layers 30 and the separators 5 with the electrolyte, then placed in an aluminum case 70, the opening 7 of the aluminum case 70 being sealed with a watertight packing 8. The electrolyte in the electric double-layer capacitor has used polypropylene carbonate as an organic solvent, and a tetraethyl ammonium salt as an electrolyte, for example.

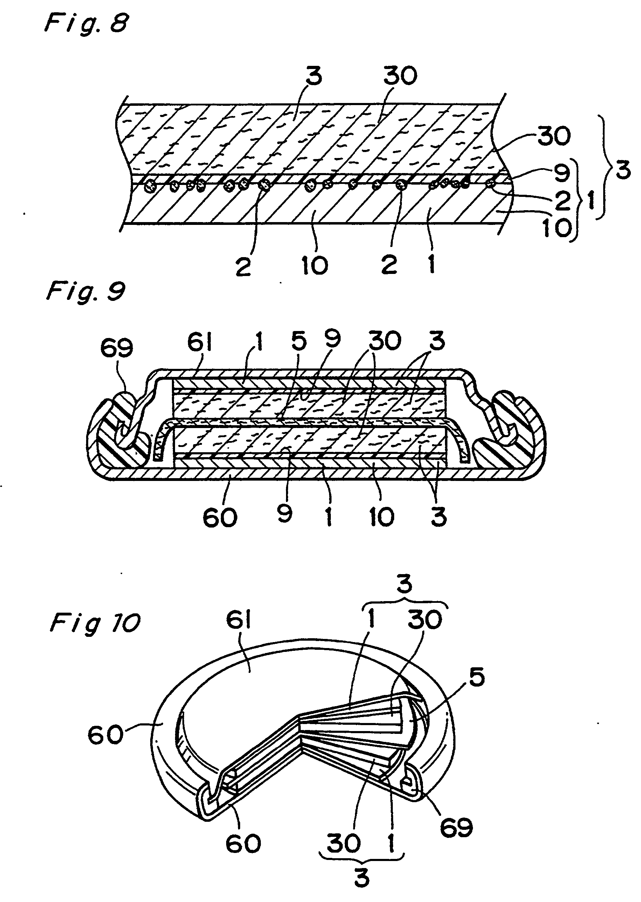

Furthermore, in a button-type electric double-layer capacitor, schematically shown in Figs. 9 and 10, activated carbon layers 30 are joined to disc-like sheets 1 made of a valve metal material, respectively, to form a pair of double-layer electrodes 3. The pair of double-layer electrodes 3 is disposed face-to-face via an insulating separator 5 therebetween, and accommodated in a metal container comprising two mating members. The valve metal material sheets of the two double-layer electrodes are joined to the inner surface sides of the bottom member 60 and the lid member 61 of the metal container. Both the bottom and lid members are joined to each other so as to be watertight by using an insulating ring packing 69 at the peripheral portion thereof. The interior of the capacitor is filled with nonaqueous electrolyte so that the double-layer electrodes and the activated carbon layers are immersed therein sufficiently. The nonaqueous electrolyte is a solution of tetraethyl ammonium perchlorate added in propylene carbonate in the same way as described above.

An electrolytic capacitor is known as a capacitor in which nonaqueous electrolyte is used. In the anode of the capacitor, a dielectric film is formed by chemically treating the valve metal foil. In the cathode, the valve metal foil is used as it is. Usually, both the electrodes are disposed face-to-face, wound into a coil, and hermetically enclosed in a container while being immersed in electrolyte.

In the case of the conventional electric double-layer capacitor, the valve metal sheet or foil, on which a polarizable electrode is formed as a film, has a naturally oxidized film specific to the valve metal constituting an electrode structure while the foil is handled. When this foil is used to form an electrode structure, a thin, insulating oxidized film 4 is frequently formed at the interface between the aluminum foil 1 used as a valve metal material and the polarizable electrode 3, as schematically shown in Fig. 6.

Furthermore, the above-mentioned nonaqueous electrolyte typically includes slight amounts of water and oxygen. For this reason, the valve metal material constituting the electrode structure reacts with the water content in the electrolyte during use of the capacitor, and the surface of the metal is oxidized. Therefore, when the electric double-layer capacitor formed of this kind of metal is used for extended periods of time, its equivalent series resistance (ESR), i.e., the internal resistance of the capacitor used as a power source, increases gradually, and, in some cases, its capacitance decreases.

This problem due to the oxidation of the metal portion of the electrode has also occurred in the case of the above-mentioned button-type electric double-layer capacitor in the same way.

Furthermore, the anode of the electrolytic capacitor using nonaqueous electrolyte is provided with a dielectric insulating layer formed by anodizing a valve metal such as aluminum. In addition, its cathode in direct contact with the electrolyte is also formed of the valve metal such as aluminum. In this case, an oxide film is formed on the surface of the metal used for the cathode because of oxidation with the water content in the electrolyte. This causes a problem of the capacitor increasing in internal resistance, just like the problem described above.

EP-A-0 449 145 discloses an electrode metal material for using in an electrode structure in contact with a organic solvent, wherein the electrode comprises a valve metal material (e.g. aluminium, tantalum or titanium) and carbon in a surface of the valve metal material formed by driving, e.g. using a roller, a dispersion of carbon particles (e.g. in a slurry) to the surface of said valve material substrate.

### SUMMARY OF THE INVENTION

Accordingly, an object of the present invention is provide a valve metal material capable of being formed into electrodes used in contact with nonaqueous electrolyte inside a capacitor, and capable of reducing the internal resistance of the capacitor.

Another object of the present invention is to provide a method of producing a valve metal material capable of being formed into electrodes used in contact with nonaqueous electrolyte, and capable of reducing the internal resistance of such a capacitor as described above.

A still another object of the present invention is to provide a capacitor capable of having a low internal resistance by restricting the change in the resistance of the electrode metal material constituting the electrodes used in contact with nonaqueous electrolyze.

A yet still another object of the present invention is to provide a method of producing a capacitor capable of having a low internal resistance by restricting the change in the resistance of the electrode metal material constituting the electrodes used in contact with nonaqueous electrolyte.

An electrode metal material in accordance with the present invention as defined in claim 1 is formed of a valve metal material containing carbon particles on the surface, and is used to form electrodes. The carbon particles in the carbon-containing metal material ensure direct contact with a conductor (including electrolyte) to electrically connect the electrode metal material to the conductor

In particular, the carbon-containing metal material comprises a valve metal material and numerous carbon particles partially embedded in the surface of the valve metal material and projected form the surface of the valve metal material to expose the carbon particles from the surface. In the present invention, the carbon particles may be projected slightly so as to be exposed to the surface of the valve metal material in order to enhance the conductivity and joining characteristic to a conductor to become contact therewith.

The electrode metal material in accordance with the present invention is used to obtain electrode structures used in contact with nonaqueous electrolyte. This kind of carbon-containing metal material itself may be an electrode making contact with electrolyte. Alternatively, the electrode metal material may have an activated carbon layer coated and formed on the surface of the carbon-containing metal material, i.e., a polarizable electrode. The former corresponds to the cathode of an electrolytic capacitor, and the latter corresponds to the double-layer electrode of an electric double-layer capacitor.

Inside the electrolytic capacitor, the carbon particles of the carbon-containing metal material, exposed to the surface thereof, make direct contact with the electrolyte to ensure conductivity between the metal material and the electrolyte. In addition, inside the electric double-layer capacitor, the carbon particles of the carbon-containing metal material, exposed to the surface thereof, can make direct contact with the activated carbon layer to ensure conductivity between the metal material and the activated carbon layer. In either of the cases, even if the carbon-containing metal material makes contact with the electrolyte, and the metallic surface thereof is oxidized by water content or the like in the electrolyte, the above-mentioned conductivity almost remains unchanged.

More particularly, a valve metal material wherein numerous carbon particles are fixed in the surface thereof so as to project on the surface is adopted as the valve metal material of the present invention. Therefore, it is preferable that the surface of the valve metal material is shaved so that the carbon particles project. With this configuration, the uneven shape on the surface of the valve metal material ensures conductivity to the activated carbon layer, and also enhances strength of joining to the activated carbon layer.

More particularly, the metallic surface of the valve metal material is coated with a passive film. For this reason, although the metallic surface of the valve metal material loses conductivity, the metallic surface is prevented stably from oxidation due to contact with the electrolyte, and the valve metal material has stable conductivity via the carbon particles for extended periods of time.

The valve metal material in accordance with the present invention can be formed into a sheet. The term "sheet" herein refers to a plate, sheet, film and foil. The valve metal material may be formed of products other than the sheets, having a small thickness with a desired shape. @4/25

The sheet and other formed products include carbon particles at least on one side thereof. They may include carbon particles on both sides thereof.

The valve metal material for electrodes in accordance with the present invention is obtained according to the method of claim 11 and 12, by driving numerous carbon particles onto the surface thereof. According to claim 12, a method of pressing using dies or rolling using rollers is employed to drive the carbon particles in to the valve metal sheet. Further according to claim 11, the method of producing the valve metal material for electrodes in accordance with the present invention may include a step wherein the powder material for the valve metal and carbon particles are semi-melted in a mixture condition and subjected to pressure so as to be formed into a dense metal ingot. The metal ingot, including carbon particles dispersed inside, is forged or rolled into a product having a desired shape, and then the carbon particles are exposed to the surface of the product.

### BRIEF DESCRIPTION OF THE DRAWINGS

The present invention will be described below in detail referring to the accompanying drawings.
Fig. 1 is a schematic sectional view showing an example of a carbon-containing valve metal material in accordance with the present invention, wherein carbon particles are fixed in the surface of the valve metal sheet;
Fig. 2 is a schematic sectional view showing another example of a carbon-containing valve metal material in accordance with the present invention;
Fig. 3 is a schematic sectional view showing still another example of a carbon-containing valve metal material in accordance with the present invention;
Fig. 4 is a schematic sectional view showing yet still another example of a carbon-containing valve metal material in accordance with the present invention, wherein carbon particles are fixed on both sides of the valve metal sheet;
Fig. 5 is a schematic partially-sectional view showing a double-layer electrode used for an electric double-layer capacitor formed of the carbon-containing valve metal material in accordance with the present invention;
Fig. 6 is a schematic partially-sectional view showing a double-layer electrode used for a conventional electric double-layer capacitor;
Fig. 7 is a schematic partially-cutaway perspective view showing a winding type electric double-layer capacitor;
Fig. 8 is a schematic partially-sectional view showing a double-layer electrode used for a button-type electric double-layer capacitor formed of the carbon-containing valve metal material in accordance with the present invention;
Fig. 9 is a schematic sectional view showing the button-type electric double-layer capacitor; and
Fig. 10 is a schematic partially-cutaway perspective view showing the button-type electric double-layer capacitor.

### DETAILED DESCRIPTION OF THE INVENTION

The valve metal material for electrodes in accordance with the present invention includes carbon particles on the surface thereof as described above. The valve metal can be selected from among metals capable of forming a passive state layer on the surface thereof. For example, such valve metals may include tantalum, aluminum, titanium, niobium, zirconium, bismuth, silicon and hafnium. Alternatively, the valve metal can be selected from among alloys including these elements and capable of generating a valve action, for example, a titanium-based alloy including boron and tin, a titanium-based alloy including chromium and vanadium, a titanium-based alloy including vanadium and antimony and an aluminum-based alloy including titanium. The most desirable material is aluminum, in particular, high-purity aluminum.

The electrode metal material of the present invention is formed into a form having a desired thickness, for example, a sheet. The thickness of the sheet is in the range of 10 µm to 5 mm, although the thickness depends on the kind of capacitor or the kind of electrode. Generally, for winding type electric double-layer capacitors and electrolytic capacitors, metal foil having a thickness of 50 to 500 *µ*m is preferably used to provide flexibility and the sufficient winding turns. On the other hand, for button-type electric double-layer capacitors, the valve metal material, when also used as a part of the wall or bottom portion of the container, should preferably have a larger thickness of about 0.50 to 3.0 mm, for example, to provide strength to the wall or bottom portion.

A base metal plate for providing strength may be clad with the above-mentioned thin valve metal material, and carbon particles may be included in the clad valve metal material used. A highly corrosion-resistant metal or alloy, such as nickel or stainless steel, may be used as this kind of base metal.
On the other hand, carbon particles are formed of conductive carbon particles, such as graphite or carbon black. Carbon black may be formed of acetylene black as an example. Furthermore, carbon particles may be formed of activated
The diameter of carbon particles should preferably be in the range of 0.01 to 50 µm, more preferably, in the range of 0.1 to 10 µm. In addition, the carbon particles can have one of particulate, granular and fibrous forms. In the case of fibrous carbon particles, the above-mentioned particle diameter in the range of 0.1 to 50 µm refers to the fiber length thereof.

The content of carbon particles should preferably be in a range of 5 to 90% of the area percentage of the carbon with respect to the whole surface area of the valve metal material. If the area percentage of the carbon is less than 5%, it may be difficult to sufficiently reduce contact resistance at the surface. The area percentage of the carbon should preferably be higher. However, if the area percentage of the carbon is more than 90%, it becomes difficult to stably hold carbon particles pressed into the surface of the valve metal by a press method. Accordingly, the area percentage of the carbon particles on the surface should preferably be in a range of 20 to 75%, more preferably, in a range of 30 to 60%.

The valve metal material should preferably have a rough surface. In particular, carbon particles should preferably project slightly from the surface of the metal material. The projection of the carbon particles can be obtained when the surface is subjected to electrolytic etching inside an acidic aqueous solution. The exposure of numerous carbon particles can increase the contact frequency of an activated carbon layer for an electric double-layer electrode structure. Furthermore, the activated carbon layer can be firmly fixed by an anchor effect.

Fig. 1 shows a carbon-driven metal material 1 wherein nearly particulate carbon particles 2 are driven on one side of a sheet of valve metal material 10. This figure shows a schematic view of an example of the valve metal material in which the carbon particles 2 are partially embedded in the surface of the metal material and the upper portions thereof project from the surface.

Fig. 2, similar to Fig. 1, is a conceptual view showing a condition wherein the carbon particles 2 are crushed and wholly embedded in the surface of the metal material. However, in the carbon-driven metal material 1, the surfaces of the carbon particles are still exposed to the surface of the metal material, and the carbon particles can be used to ensure conductivity. This condition may be obtained when relatively soft carbon particles are pressed strongly.

Fig. 3 is a view showing a condition wherein the carbon-driven metal material 1 shown in Fig. 2 is subjected to electrolytic etching to remove its metallic surface 11, thereby allowing the carbon particles to project. Fig. 4 is a view showing a condition wherein the carbon particles driven on both sides of the sheet of the valve metal material are subjected to etching, thereby allowing the carbon particles to project.

Furthermore, the rough surface may be a surface obtained by blasting the whole surface of the carbon-containing metal material. By the blasting, the surface of the valve metal material can be made rough directly, and the carbon particles can be exposed. In addition, the activated carbon layer can be fixed firmly, and the contact resistance of the surface can be reduced.

A passive film should be formed on the surface of the carbon-containing metal material (for example, the metallic surface 11 shown in Figs. 3 and 4). Even if water is present in electrolyte while the valve metal material is used as an electrode, the passive film protects the surface of the valve metal material against oxidation and corrosion. Therefore, the electrodes can be stabilized further, without adversely affecting the conductivity thereof due to the existence of the carbon particles.

The passive film should only have a thickness capable of withstanding the working voltage of a capacitor comprising the film. For example, in the case of an electric double-layer capacitor rated at 2.5 to 3.5 V, the film should only have a thickness capable of withstanding a voltage in the range of 4 to 5 V. In this case, the valve metal material is provided with a passive film having a thickness of 60 Å or more.

Some methods are adopted to produce an electrode metal material formed of a valve metal material containing numerous carbon particles at least in the surface thereof.

In a first method, a mixture of valve metal powder and carbon powder is heated and pressurized in a container so that the carbon powder may be contained in a valve metal ingot. This method further includes a step of subjecting the ingot of carbon-containing valve metal produced by the above step to plastic working in order to obtain a desired shape of the valve metal material. In the plastic working step, hot or cold forging or rolling can be utilized, whereby forming a sheet having a desired thickness or a formed product having any other shapes.

A second method includes a carbon-powder driving step wherein carbon particles are driven into the surface of the valve metal material by pressurizing carbon particles dispersed on the surface of the valve metal material.

The above-mentioned carbon particle driving step can also be accomplished by a die press method wherein dies are used to press and fit carbon particles into the surface of the valve metal material. The dies may have a flat, hardened plate or the like.

Furthermore, the above-mentioned carbon particle driving step can also be accomplished by a rolling method wherein rollers are used to drive carbon particles into the surface of the valve metal material. In either of the two methods, carbon particles can be pressed and fitted in the surface of the valve metal material and fixed.

By using the second method, carbon particles are driven in the surface of the valve metal material having a desired thickness. The above-mentioned carbon particle driving step can be accomplished by applying a surface pressure of 0.5 to 10000 kg/cm² in a direction perpendicular to the surface of the metal material. This pressure is determined depending on the hardness of the surface of the valve metal material and the hardness of the carbon particles.

Furthermore, the carbon particle driving step may also be used as a step of pressing or forging a valve metal blank into a formed product having a desired shape. In other words, in this case, the carbon particle driving step is carried out when the valve metal ingot is hot or cold worked. In this step, just when the valve metal material is pressurized by hot or cold forging or rolling, the carbon particles are driven into the forged or rolled surface.

Furthermore, in the production method in accordance with the present invention, the valve metal surface should preferably be made rough after the carbon particle press-fitting step. For this purpose, it is desired that, after the carbon particle driving step, the production method includes a step of exposing the carbon particles to the surface by carrying out electrolytic etching in an acidic aqueous solution. By this treatment, the carbon particles exposed on the surface project from the surface, making the surface rough. In addition, the carbon particles slightly embedded below the surface are exposed to the surface. The exposure of numerous carbon particles can increase the contact frequency of an activated carbon layer for an electric double-layer electrode structure. Furthermore, the activated carbon layer can be firmly fixed by an anchor effect.

After the carbon powder driving step, the production method includes a step of exposing carbon particles to the surface by further carrying out blasting. This method can also accomplish direct roughing of the surface and exposing of the carbon particles by blasting.

The production method should preferably include a step of forming a passive film on the metallic surface of the metal material after the carbon particle exposing step. The formation of the film is accomplished by using a method wherein the carbon-containing metal material is heated and oxidized in an oxidative atmosphere, such as in the air. Alternatively, another method is used, wherein the carbon-containing metal material is subjected to anodic oxidation. The passive film should have a thickness capable of withstanding an applied voltage of 4 to 5 V in the case of an electric double-layer capacitor rated at 2.5 to 3.5 V, for example. In this case, the valve metal material is provided with a passive film having a thickness of 60 Å or more.

Capacitors in accordance with the present invention include electric double-layer capacitors and electrolytic capacitors. In both types of the capacitors, nonaqueous electrolyte is used, and the valve metal material thereof makes contact with the electrolyte.

Fig. 7 is a schematic view showing a winding type capacitor used as a kind of electric double-layer capacitor. The winding type capacitor is provided with flexible electric double-layer electrodes. The electrode comprises thin valve metal foil used as a valve metal material, and activated carbon layers bonded to both sides of the foil. Numerous carbon particles are fixed on the surface of the foil so as to expose, thereby making contact with the activated carbon layers.

A pair of electric double-layer electrodes, holding a separator therebetween, is wound to a coil and enclosed in a container while being immersed in nonaqueous electrolyte, thereby forming an electric double-layer capacitor. The electrolyte is formed of an organic solvent not including water and a salt dissolved in such a solution so as to be dissociated. A solution wherein tetraethyl ammonium perchlorate used as an electrolyte is added to propylene carbonate used as a solvent is taken as an example.

The activated carbon layer is formed in a thin film by forming activated carbon powder into a paste form and by applying the paste to the surface of the valve metal foil. The paste is obtained, for example, by kneading a mixture of activated carbon powder, conductive carbon powder and an appropriate binder, such as cellulose or fluororesin, as necessary, together with water or other solvent. The coated paste film is appropriately dried and heated together with the valve metal foil to cure the binder, whereby the film is fixed to obtain an electric double-layer electrode.

Leads are connected to the pair of electric double-layer electrodes, one lead to each electrode. Furthermore, the electrodes were wound while holding a separator therebetween so as to be formed into a coil. The separator is formed of an appropriate thin material that is insulating and water-permeable, such as glass-fiber woven or non-woven cloth.

The coil comprising the electric double-layer electrodes and the separator is immersed in electrolyte and accommodated in a metal container having a bottom. The opening of the container is sealed with a sealing material. The leads pass through the sealing material and are extended outside.

With the above-mentioned structure of the electrode, even when a thin insulating film 4 is present at the interface between the foil-like metal material 10 of the electrode metal material 1 and the polarizable electrode 30 of the electric double-layer capacitor as shown in Fig. 5, no oxidized film is formed on the surfaces of carbon particles 2 exposed from the electrode foil 10. For this reason, electric conduction can be maintained by the carbon particles 2 at portions wherein the carbon particles 2 are present. As a result, the equivalent series resistance (ESR) of the electric double-layer capacitor decreases, and the conduction portions increase in number, whereby the capacitance thereof increases.

Figs. 9 and 10 show a button-type electric double-layer capacitor. An activated carbon layer 30 is bonded to a disc-like sheet 10 formed of the valve metal material of the present invention via an adhesive layer 9, thereby forming a pair of double-layer electrodes 3. The two double-layer electrodes 3 are disposed face-to-face with an insulating separator 5 therebetween, and accommodated inside a metal container comprising two mating portions 60 and 61.

The valve metal material sheets 10 and 10 of the two double-layer electrodes 3 and 3 are joined to the inner surface sides of the bottom portion 60 and the lid portion 61 of the metal container, respectively. The bottom portion and the lid portion are then joined to each other at their peripheral portions so as to be watertight via an insulating ring packing 69. The container is filled with nonaqueous electrolyte so that the double-layer electrodes and the activated carbon layers are sufficiently immersed in the electrolyte. The nonaqueous electrolyte may be, for example, a solution of tetraethyl ammonium perchlorate used as an electrolyte in propylene carbonate used as a solvent, as described above.

Double-layer electrodes 3 for the button-type electric double-layer capacitor are shown in Fig. 8. The activated carbon layer 30, i.e., the polarizable electrode 30, is formed of a sheet made of activated carbon particles or fibers.

For example, the activated carbon layer 30 is obtained as described below. A paste is prepared by mixing activated carbon powder, a solvent and an appropriate binder, and this paste is formed into thin film, which are dried and cured to obtain sheets including activated carbon particles. The sheets are used as the activated carbon layer 30.

The sheet of activated carbon fiber is formed of fiber activated at the carbonization step of phenol-based resin fiber, for example. The activated carbon fiber is woven into a sheet.

The above-mentioned activated carbon particle sheet or the activated carbon fiber sheet is stamped into sheet pieces having a desired shape, and the sheet pieces are bonded to the carbon-containing side of the valve metal material sheet so as to be assembled into the double-layer electrode 3. An organic adhesive 9, being conductive, is usually used for the bonding.

The conductive adhesive may be used to firmly bond a sheet of chemically active carbon fiber or the like to the valve metal material sheet. Furthermore, the adhesive 9 is used to electrically connect the carbon particles on the valve metal material side to some parts of the fiber and particles on the activated carbon side. The carbon particles 2 on the valve metal material side ensures conductivity at the double-layer electrode 3 via the adhesive layer 9, thereby reducing the internal resistance of the capacitor used as a power source.

The present invention also includes a nonaqueous electrolytic capacitor having a cathode formed of the sheet of valve metal material. The anode of the electrolytic capacitor is formed of a valve metal sheet provided with an insulating, very thin, highly dielectric layer on the surface thereof. The cathode thereof is formed of a valve metal sheet including carbon particles on the surface thereof. Both the sheets of the anode and the cathode, disposed face-to-face, are wound or integrated, and they are accommodated in a container and immersed into electrolyte inside the container.

The electrolyte of this electrolytic capacitor is prepared by adding, for example, an appropriate inorganic or organic salt to an ethylene glycol-based solvent. Even if a small amount of water is present in the electrolyte, only the metallic surface of the valve metal material is oxidized, whereby the carbon particles hold contact with the electrolyte to ensure conductivity. For this reason, the electrolytic capacitor is far less likely to decrease in resistance, and the internal resistance thereof is far less likely to increase even after use for extended periods of time.

### EMBODIMENTS

### [Embodiment 1]

A valve metal was formed of high-purity aluminum foil of four-nine grades, having a thickness of 20 *µ*m. An electrode metal material was produced as described below. Acetylene black particles having an average particle diameter of 2 µm were dispersed uniformly on the surface of the metal foil at 50% by weight with respect to the metal foil per unit area of the foil, and subjected to a line pressure of 100 kg/cm² in a direction perpendicular to the surface of the foil by using reduction rollers. As a result, carbon-embedded metal foil, wherein numerous carbon particles were driven in the surface of the aluminum foil, was obtained.

### [Embodiment 2]

In the same way, an electrode metal material was produced as described below. Acetylene black particles having an average particle diameter of 2 µm were dispersed uniformly on the surface of high-purity aluminum foil of four-9 grade, having a thickness of 20 µm, at 50% by weight in the same way as described above, and subjected to a line pressure of 100 kg/cm² in a direction perpendicular to the surface of the foil by using rollers. Numerous carbon particles were thus driven in the surface of the aluminum foil. After this, the carbon-embedded metal foil was subjected to electrolytic etching in a nitric-acid-based etching solution to expose the carbon particles to the surface.

### [Embodiment 3]

In the same way, phenol-resin-based activated carbon particles having a particle diameter of 10 µm were dispersed uniformly on the surface of etched high-purity aluminum foil of four-9 grade, having a thickness of 20 µm, which is used as a valve metal material, and then subjected to a pressure of 100 kg/cm² in a direction perpendicular to the surface of the foil by using reduction rollers. As a result, numerous carbon particles were driven in the surface of the aluminum foil. After this, the carbon-embedded metal foil was subjected to blasting to expose the carbon particles to the surface.

Electric double-layer capacitors were assembled by using these pieces of carbon-embedded metal foil for electrodes in accordance with Embodiments 1 to 3. To form a double-layer electrode, the carbon-embedded metal foil was coated with a paste including activated carbon particles. To prepare the paste, after obtaining a powder mixture of phenol-resin-based activated carbon particles having a particle diameter of 5 µm, an ammonium salt of carboxymethyl cellulose (C₆H₉O₅CH₂CO₂NH₄)ₙ and acetylene black in a weight ratio of 10: 1.2: 2, methanol three times as much as the powder mixture and water five times as much as the powder mixture by weight were added to the powder mixture and kneaded. The electrode metal material foil was immersed in this paste for 15 seconds, whereby a film of the paste was formed on the metal foil 1. The foil was then dried for 1 hour at 100°C in the air to form an activated carbon layer (polarizable electrode). Next, the foil was cut and divided into two sheets, each having dimensions of 25 x 400 mm, thereby obtaining a pair of double-layer electrodes.

Next, aluminum leads 6 were connected to the double-layer electrodes, one lead to each electrode. The two double-layer electrodes were disposed face-to-face with a separator 5 therebetween, and then wound and formed into a coil. The coil was immersed into electrolyte wherein tetra ethyl ammonium perchlorate was added to propylene carbonate in a ratio of 0.5 mol/litter, and vacuuming was carried out, whereby the double-layer electrodes 3 and the separator 5 were impregnated with the electrolyte. The double-layer electrodes 3 and the separator 5 were then inserted into an aluminum case 7, and the case 7 was sealed with a packing, whereby an electric double-layer capacitor was obtained.

### [Embodiment 4]

Just as in the case of Embodiment 1, a valve metal material was formed by press-fitting carbon particles in the surface thereof. The valve metal material was electrolytically etched in a nitric-acid-based etching solution to expose the carbon particles to the surface thereof, and then subjected to oxidation at 400°C for 2 minutes in the air.
Just as in the case of Embodiment 1, an activated carbon layer was formed on the surface of the valve metal material to obtain a double-layer electrode. By using the electrodes, an electric double-layer capacitor was obtained.

### [Embodiment 5]

Just as in the case of Embodiment 3, a valve metal material was formed as described below. Phenol-resin-based activated carbon particles having a particle diameter of 10 *µ*m were dispersed uniformly on aluminum foil having a thickness of 20 *µ*m, and the foil was subjected to blasting to expose the carbon particles to the surface thereof.

To form double-layer electrodes, valve metal material foil was coated with a paste. To prepare the paste, after obtaining a powder mixture of phenol-resin-based activated carbon particles having a particle diameter of 5 µm, an ammonium salt of carboxymethyl cellulose and acetylene black in a weight ratio of 10: 1.2: 2, methanol three times as much as the powder mixture and water five times as much as the powder mixture by weight were added to the powder mixture and kneaded. The electrode metal material foil was immersed in the paste for 15 seconds, whereby a film of the paste was formed on the metal foil 1. After this, the foil was dried for 1 hour at 180°C in the air to form an activated carbon layer (polarizable electrode). The foil was then cut to divide into two sheets, each having dimensions of 25 x 400 mm, thereby obtaining a pair of double-layer electrodes. Next, just as in the case of the above-mentioned embodiments, the double-layer electrodes were used to assemble an electric double-layer capacitor.

### [Embodiment 6]

Just as in the case of Embodiment 3, a valve metal material of aluminum foil with a thickness of 20 µm, on which phenol-resin-based activated carbon particles having a particle diameter of 10 µm were dispersed uniformly, was subjected to blasting to expose the carbon particles on the surface. Furthermore, this valve metal material was subjected to an oxidizing treatment at 400°C for 2 minutes in the air.

The foil of the carbon-containing valve metal material obtained as described above was coated with a paste to form double-layer electrodes. The paste was prepared by kneading a powder mixture comprising phenol-resin-based activated carbon fiber having been cut to a length of 5 µm in the long-chain direction thereof, an ammonium salt of carboxymethyl cellulose and acetylene black in a weight ratio of 10: 1.2: 2, respectively, together with methanol three times as much as the powder mixture and water five times as much as the powder mixture by weight added to the powder mixture. The electrode metal material foil was immersed in the paste for 15 seconds, whereby a film of the paste was applied on the metal foil 1. The foil was then dried for 1 hour at 180°C in the air to form an activated carbon layer. The foil was then cut and divided into two sheets, each having dimensions of 25 x 400 mm, thereby obtaining a pair of double-layer electrodes. Next, just as in the case of the above-mentioned embodiments, an electric double-layer capacitor was obtained.

### [Embodiment 7]

Just as in the case of Embodiment 1, a valve metal material was obtained by using aluminum film having a thickness of 20 *µ*m, on which phenol-resin-based activated carbon particles having a particle diameter of 10 µm were dispersed uniformly.

To prepare a mixture powder for a paste, a powder mixture of phenol-resin-based activated carbon fiber having been cut to a length of 5 µm in the long-chain direction thereof, an ammonium salt of carboxymethyl cellulose and acetylene black in a weight ratio of 10: 1.2: 2 was used. To this powder mixture, methanol three times as much as the powder mixture and water five times as much as the powder mixture by weight were added in order to prepare a mixture solution in slurry form. A collector 1 was then immersed in the mixture solution for 15 seconds, whereby a polarizable electrode 3 was formed as a film on the collector 1. Next, the electrode was dried for 1 hour at 180°C in the air, and the foil was cut and divided into two sheets, each having dimensions of 25 x 400 mm, thereby obtaining a pair of double-layer electrodes. Just as in the case of the above-mentioned embodiments, an electric double-layer capacitor was obtained.

### [Comparative example]

Electrode metal material foil was formed of high-purity aluminum foil of four-9 grade, having a thickness of 20 µm and not including carbon particles. This valve metal material was immersed in a water solution of 1.0 N hydrochloric acid, 6.0 N nitric acid and 4.0 N phosphoric acid. The aluminum foil was subjected to etching by applying direct current to the foil used as the anode. An electric double-layer capacitor was obtained just as in the case of Embodiment 1.

The capacitors in accordance with these embodiments and the comparative example were charged at a constant voltage of 2.5 V for 1 hour. The capacitors were then discharged at a constant current of 100 mA, and the capacitance C and equivalent series resistance (ESR) values of the capacitors were measured. Furthermore, the capacitors were charged at a constant voltage of 2.8 V at 75°C in a constant temperature bath, and maintained in these conditions for 3000 hours. They were then discharged at a constant current of 100 mA, and the capacitance C and equivalent series resistance (ESR) values were measured in the same way. Table 1 shows the results of the measurements.

**Table 1**

| | Surface treatment | C | ΔC | ESR | ΔESR |
|---|---|---|---|---|---|
| | | (F) | (%) | (mΩ) | (%) |
| Embod. 1 | Carbon-embedding | 27 | -16.1 | 55 | 16.5 |
| Embod. 2 | Carbon-embedding, etching | 42 | - 5.5 | 28 | 4.0 |
| Embod. 3 | Carbon-embedding, blasting | 48 | - | 32 | - |
| Embod. 4 | Carbon-embedding, etching, oxidation | 40 | - 3.0 | 30 | 2.5 |
| Embod. 5 | Carbon-embedding, blasting, oxidation | 48 | - 6.2 | 32 | 4.5 |
| Embod. 6 | Carbon-embedding, blasting, oxidation | 45 | - 3.0 | 34 | 2.8 |
| Embod. 7 | Carbon-embedding | 35 | -18.5 | 60 | 14.8 |
| Comparison | - | 20 | -27.5 | 80 | 22.0 |

The ΔC and ΔESR in Table 1 represent the change ratios of C and ESR from the initial C and ESR values to those obtained 3000 hours after treatments in the above-mentioned conditions, respectively.

As clearly disclosed in Table 1, it is understood that the capacitance values of the electric double-layer capacitors formed of the carbon-containing metal materials in accordance with the embodiments are larger than that of the comparative example, and that the ESR values of the former are smaller than that of the latter. This can be explained as follows: by using electrode foil to which carbon particles are added, the carbon particles are exposed to the surface of the electrode foil, whereby conductivity can be maintained at the interface between the electrode foil and the polarizable electrode. Furthermore, according to this table, it is found that the stability of capacitance and ESR with respect to time can be enhanced by making the surface of the carbon-containing metal material rough by carrying out etching or blasting, in particular, by carrying out oxidization to form a passive film.

The electrode metal material in accordance with the present invention is used to form a capacitor electrode structure making contact with electrolyte, and includes numerous carbon particles on the surface of the valve metal material. Therefore, electric connection can be ensured between a carbon electrode member, such as activated carbon particles, to which the electrode metal material is joined, and the electrolyte, whereby a stable electrode structure can be obtained. For this reason, the electrode function of this electrode metal material is not deteriorated even if the material is used in the presence of water in the electrolyte.

In addition, the carbon particles of the electrode metal material can be fixed in the surface of the valve metal material so as to be exposed to the surface, thereby enhancing electric connection and joining to the electrode members.

Furthermore, when the surface of the valve metal material of the electrode metal material is coated with a passive film, high conductivity to the electrode members and the electrolyte can be ensured stably for extended periods of time. The electrode metal material in accordance with the present invention is coated with an activated carbon layer, and can be used as the double-layer electrodes of an electric double-layer capacitor. Therefore, it is possible to attain an electric double-layer capacitor having a low internal resistance and a large capacitance value.

Moreover, the electrode metal material, making contact with electrolyte, is used as the cathode of an electrolytic capacitor, whereby it is possible to obtain a cathode having stable conductivity for extended periods of time. Therefore, it is possible to attain an electrolytic capacitor having a low internal resistance and a large capacitance value.

### INDUSTRIAL USABILITY

The electrode metal materials in accordance with the present invention can be produced in the fields of the metal industry and electronic component materials, and can be used as electrode materials for electric double-layer capacitors and electrolytic capacitors. Furthermore, the capacitors in accordance with the present invention can be widely produced and used as electronic components in the field of electronic component materials, and can be applied to a wide range of various electronic apparatuses.

## Claims

1. An electrode metal material (1) for using in an electrode structure in contact with nonaqueous electrolyte, wherein the electrode metal material (1) is a carbon-containing metal material comprising a valve metal material (10) and numerous carbon particles (2) partially embedded in a surface of the valve metal material (10) by driving said numerous carbon particles (2) into said surface of the valve metal material (10) and projected from the surface of said valve metal material (10) to expose said carbon particles (2) from said surface.

2. The electrode metal material (1) according to Claim 1, wherein the metallic surface of said carbon-containing metal material is coated with a passive film.

3. The electrode metal material(1) according to Claim 1, wherein said electrode metal material (1) is coated with an activated carbon layer (30) to form a double-layer electrode (3) for an electric double-layer capacitor.

4. The electrode metal material (1) according to Claim 1, wherein said electrode metal material(1) is a cathode of an electrolytic capacitor, making contact with nonaqueous electrolyte.

5. The electrode metal material (1) according to any one of Claims 1 to 4, wherein said electrode metal material (1) is thin sheet.

6. The electrode metal material (1) according to any one of Claims 1 to 4, wherein said valve metal material (10) is one selected from among tantalum, aluminum, titanium, niobium, zirconium, bismuth, silicon, hafnium, a titanium-based alloy containing boron and tin, a titanium-based alloy containing chromium and vanadium, a titanium-based alloy containing vanadium and antimony and an aluminum-based alloy containing titanium.

7. The electrode metal material (1) according to any one of Claims 1 to 4, wherein said carbon particles (2) are formed of conductive carbon particles (2), such as graphite or carbon black.

8. The electrode metal material(1) according to any one of Claims 1 to 4, wherein said carbon particles (2) are activated carbon particles (2).

9. The electrode metal material (1) according to any one of Claims 1 to 4, wherein said carbon particles(2) has a diameter of the range of 0.01 to 50 *µ*m.

10. The electrode metal material(1) according to any one of Claims 1 to 4, wherein said carbon particles (2) have one of particulate, granular and fibrous forms.

11. A method of producing an electrode metal material (1), being a carbon-containing metal material comprising a valve metal material (10) and numerous carbon particles (2) partially embedded in at least a surface of said valve metal material (10) and projected from said surface of said valve metal material (10) to expose said carbon particles (2) from said surface, wherein said method comprises the steps of:
including said carbon particles (2) in a valve metal ingot by heating and pressurizing a mixture of valve metal powder and carbon powder in a container; and,
forming said obtained valve metal ingot into a desired shape so as to be used as said carbon-containing metal material.

12. A method of producing an electrode metal material (1), being a carbon-containing metal material comprising a valve metal material (10) partially embedded numerous carbon particles (2) in at least a surface of the valve metal material (10), said carbon particles (2) projected from the surface of said valve metal material (10) to expose said carbon particles (2) from said surface, wherein said method comprises a carbon embedding step of driving the carbon particles (2) into the surface of said valve metal material (10) by pressurizing said carbon particles (2) dispersed on the surface of said valve metal material (10) to obtain said carbon-containing metal material.

13. The method of producing an electrode metal material (1) according to Claim 12, wherein said carbon embedding step uses a press method in which said carbon particles (2) are driven by using a die.

14. The method of producing an electrode metal material (1) according to Claim 12, wherein said carbon embedding step uses a rolling method in which said carbon particles (2) are driven by using a roller.

15. The method of producing an electrode metal material (1) according to Claim 12, wherein said carbon embedding step is carried out when said valve metal material (10) is formed by hot or cold working.

16. The method of producing an electrode metal material (1) according to any one of Claims 11 to 14, wherein the method comprises a step of coarsening the surface of said carbon-containing metal material.

17. The method of producing an electrode metal material (1) according to any one of Claims 11 to 14, wherein the method comprises a further step of exposing said carbon particles (2) to the surface of said carbon-containing metal material by further electrolytic etching said carbon-containing metal material in an acidic aqueous solution.

18. The method of producing an electrode metal material (1) according to any one of Claims 11 to 14, wherein the method comprises a step of exposing said carbon particles (2) to the surface of said carbon-containing metal material by blasting said carbon-containing metal material.

19. The method of producing an electrode metal material (1) according to Claim 17, wherein the method comprises a step of forming a passive film on the metallic surface of said carbon-containing metal material after said step of exposing said carbon particles (2).

20. The method of producing an electrode metal material (1) according to any one of Claims 11 to 14, wherein said valve metal material (10) is one selected from among tantalum, aluminum, titanium, niobium, zirconium, bismuth, silicon, hafnium, a titanium-based alloy containing boron and tin, a titanium-based alloy containing chromium and vanadium, a titanium-based alloy containing vanadium and antimony and an aluminum based alloy containing titanium.

21. The method of producing an electrode metal material (1) according to any one of Claims 11 to 14, wherein said carbon particles (2) are formed of conductive carbon particles (2), such as graphite or carbon black.

22. The method of producing an electrode metal material (1) according to any one of Claims 11 to 14, wherein said carbon particles (2) are activated carbon particles (2).

23. The method of producing an electrode metal material (1) according to any one of Claims 11 to 14, wherein the diameter of said carbon particles (2) is in the range of 0.01 to 50 µm.

24. The method of producing an electrode metal material (1) according to any one of Claims 11 to 14, wherein said carbon particles(2) have one of particulate, granular and fibrous forms.

25. A capacitor comprising a pair of electrodes and nonaqueous electrolyte, wherein at least one electrode includes an electrode metal material (1) which is a carbon-containing metal material comprising a valve metal material (10) and numerous carbon particles (2) partially embedded in the surface of said valve metal material (10) by driving said numerous carbon particles (2) into said surface of the valve metal material (10) and projected from said surface of said valve metal material (10) to expose said carbon particles (2) from said surface.

26. The capacitor according to Claim 25, wherein said capacitor is an electric double-layer capacitor, and said pair of electrodes is formed of electric double-layer electrodes (3) each comprising said carbon-containing metal material and an activated carbon layer (30) formed in contact with said carbon particles (2) on the surface of said metal material.

27. The capacitor according to Claim 26, wherein said valve metal material (10) is a flexible sheet, said pair of electric double-layer electrodes (3) is disposed face-to-face with a separator therebetween and wound, and enclosed in a container to obtain a winding type electric double-layer capacitor.

28. The capacitor according to Claim 26, wherein said activated carbon layers (30) of said pair of electric double-layer electrodes (3) are accommodated in a container with a separator therebetween, and said valve metal materials (10) of said electrodes are accommodated in the metallic lid and bottom portions of a container, which are coupled so as to be insulated from each other.

29. The capacitor according to Claim 28, wherein said metallic lid and bottom portions of said container are clad with said valve metal materials (10).

30. The capacitor according to Claim 25, wherein said capacitor is an electrolytic capacitor, one of said electrode metal materials (1) is used as the cathode, and the other electrode metal material (1) having a dielectric insulating film (4) is used as the anode.

31. The capacitor according to any one of Claims 25 to 30, wherein said valve metal material (10) is one selected from among tantalum, aluminum, titanium, niobium, zirconium, bismuth, silicon, hafnium, a titanium-based alloy containing boron and tin, a titanium-based alloy containing chromium and vanadium, a titanium-based alloy containing vanadium and antimony and an aluminum-based alloy containing titanium.

32. The capacitor according to any one of Claims 25 to 30, wherein said carbon particles (2) are formed of conductive carbon particles (2), such as graphite or carbon black.

33. The capacitor according to any one of Claims 25 to 30, wherein said carbon particles (2) are activated carbon particles (2).

34. The capacitor according to any one of Claims 25 to 30, wherein the diameter of said carbon particles (2) is in the range of 0.01 to 50 *µ*m.

35. The capacitor according to any one of Claims 25 to 30, wherein said carbon particles (2) have one of particulate, granular and fibrous forms.

36. The capacitor according to any one of Claims 25 to 30, wherein a passive film is formed on the metallic surface of said valve metal material(10).

37. A method of producing an electric double-layer capacitor comprising a pair of electric double-layer electrodes (3) each formed of an activated carbon layer (30) formed on the surface of a valve metal material (10), a separator for separating said pair of electric double-layer electrodes (3) and nonaqueous electrolyte, wherein said method comprises the steps of:
forming a carbon-containing electrode metal material (1) according to claim 1;
applying a paste containing activated carbon particles (2) to the surface of said carbon-containing electrode metal material (1); and
drying and curing said paste to obtain said electric double-layer electrodes (3).

38. The method of producing a capacitor according to Claim 37, wherein, after the step of forming said carbon-containing metal material, said method further comprises a step of exposing said carbon particles (2) on the surface of said metal material by electrolytic etching said metal material in an acidic aqueous solution.

39. A method of producing a button-type electric double-layer capacitor in which a pair of electric double-layer electrodes (3), each having an activated carbon layer (30) formed on the surface of an electrode metal material (1) according to claim 1, is accommodated in a container with the activated carbon layers (30) laminated via a separator therebetween, and said electrode metal materials (1) are coupled to the metallic lid and bottom portions of the container, both portions being insulated from each other, wherein said method comprises the steps of:
forming said carbon-containing electrode metal material (1); and
applying the activated carbon layers (30) to the surfaces of the valve metal materials (10) to obtain the electric double-layer electrodes (3).

40. The method of producing an electric double-layer capacitor according to Claim 39, including a step of previously carrying out cladding of the metallic bottom portion of said container with said valve metal materials (10) at so as to accomplish integration.

41. A method of producing an electrolytic capacitor in which an anode formed of a valve metal material (10) having a dielectric insulating film (4) on the surface thereof and a cathode formed of a valve metal material (10) are disposed face-to-face in nonaqueous electrolyte, wherein said method comprises a step of
forming a carbon-containing electrode metal material (1) according to claim 1 whereby the carbon-containing metal material is used as the electrode metal material (1) for the cathode.

42. The method of producing a capacitor according to Claim 37, 39 or 41, wherein the step of forming the carbon-containing metal material includes a carbon embedding step of driving the carbon particles (2) into the surface of the valve metal material (10) by pressurizing the carbon particles (2) dispersed on the surface of said valve metal material (10) to obtain the carbon-containing metal material.

43. The method of producing a capacitor according to Claim 42, wherein said carbon embedding step uses a press method in which said carbon particles (2) are driven by using a die.

44. The method of producing a capacitor according to Claim 42, wherein said carbon embedding step uses a rolling method in which the carbon particles (2) are driven by using rollers.

45. The method of producing a capacitor according to Claim 43 or 44, wherein said carbon embedding step is carried out in a hot or cold working step to form the valve metal material (10).

46. The method of producing a capacitor according to Claim 42, including a step of coarsening the surface of said carbon-containing metal material.

47. The method of producing a capacitor according to Claim 42, wherein the method further includes a step of exposing said carbon particles (2) to the surface of the carbon-containing metal material by electrolytically etching the surface of the carbon-containing metal material in an acidic aqueous solution.

48. The method of producing a capacitor according to any one of Claims 43 to 45, wherein the method further includes a step of exposing said carbon particles (2) to the surface of the carbon-containing metal material by blasting the carbon-containing metal material.

49. The method of producing a capacitor according to Claim 47, wherein the method further includes a step of forming a passive film on the metallic surface of the carbon-containing metal material after said carbon particle (2) exposing step.

50. The method of producing a capacitor according to any one of Claims 43 to 45, wherein said valve metal material(10) is one selected from among tantalum, aluminum, titanium, niobium, zirconium, bismuth, silicon, hafnium, a titanium-based alloy containing boron and tin, a titanium-based alloy containing chromium and vanadium, a titanium-based alloy containing vanadium and antimony and an aluminum-based alloy containing titanium.

51. The method of producing a capacitor according to any one of Claims 43 to 45, wherein said carbon particles (2) are formed of conductive carbon particles (2), such as graphite or carbon black.

## Patentansprüche

1. Metallisches Elektrodenmaterial (1) zur Verwendung in einer Elektrodenstruktur in Kontakt mit nichtwässrigem Elektrolyt, wobei das metallische Elektrodenmaterial (1) ein kohlehaltiges metallisches Material ist, das ein Ventilmetallmaterial (10) und zahlreiche Kohlepartikel (2) umfasst, welche durch das Hineintreiben der zahlreichen Kohlepartikel (2) in eine Oberfläche des Ventilmetallmaterials (10) teilweise in der Oberfläche des Ventilmetallmaterials (10) eingebettet sind und von der Oberfläche des Ventilmetallmaterials (10) hervorstehen, um die Kohlepartikel (2) zur Oberfläche hin freizulegen.

2. Metallisches Elektrodenmaterial (1) nach Anspruch 1, wobei die metallische Oberfläche des kohlehaltigen metallischen Materials mit einem Passivfilm beschichtet ist.

3. Metallisches Elektrodenmaterial (1) nach Anspruch 1, wobei das metallische Elektrodenmaterial (1) mit einer Aktivkohleschicht (30) beschichtet ist, um eine Doppelschicht-Elektrode (3) für einen elektrischen Doppelschicht-Kondensator zu bilden.

4. Metallisches Elektrodenmaterial (1) nach Anspruch 1, wobei das metallische Elektrodenmaterial (1) eine Kathode eines Elektrolytkondensators ist, welcher Kontakt mit einem nichtwässrigen Elektrolyt herstellt.

5. Metallisches Elektrodenmaterial (1) nach einem der Ansprüche 1 bis 4, wobei das metallische Elektrodenmaterial (1) ein dünnes Blech ist.

6. Metallisches Elektrodenmaterial (1) nach einem der Ansprüche 1 bis 4, wobei das Ventilmetallmaterial (10) eines ist von Tantal, Aluminium, Titan, Niobium, Zirkonium, Wismut, Silizium, Hafnium, eine auf Titan basierende Legierung, die Bor und Zinn beinhaltet, eine auf Titan basierende Legierung, die Chrom und Vanadium beinhaltet, eine auf Titan basierende Legierung, die Vanadium und Antimon beinhaltet, und eine auf Aluminium basierende Legierung, die Titan beinhaltet.

7. Metallisches Elektrodenmaterial (1) nach einem der Ansprüche 1 bis 4, wobei die Kohlepartikel (2) aus leitfähigen Kohlepartikeln (2) gebildet sind, so wie Graphit oder Ruß.

8. Metallisches Elektrodenmaterial (1) nach einem der Ansprüche 1 bis 4, wobei die Kohlepartikel (2) Aktivkohlepartikel (2) sind.

9. Metallisches Elektrodenmaterial (1) nach einem der Ansprüche 1 bis 4, wobei die Kohlepartikel (2) einen Durchmesser in dem Bereich von 0,01 bis 50 µm aufweisen.

10. Metallisches Elektrodenmaterial (1) nach einem der Ansprüche 1 bis 4, wobei die Kohlepartikel (2) entweder eine korpuskulare, gekörnte oder faserige Form aufweisen.

11. Verfahren zur Herstellung eines metallischen Elektrodenmaterials (1), welches ein kohlehaltiges metallisches Material ist, das ein Ventilmetallmaterial (10) und zahlreiche Kohlepartikel (2) umfasst, welche teilweise in zumindest einer Oberfläche des Ventilmetallmaterials (10) eingebettet sind und von der Oberfläche des Ventilmetallmaterials (10) hervorstehen, um die Kohlepartikel (2) von der Oberfläche freizulegen, wobei das Verfahren die folgenden Schritte umfasst:
Einschließen der Kohlepartikel (2) in einem Ventilmetallblock, durch Erhitzen und unter Druck setzen einer Mischung aus Ventilmetallpulver und Kohlepulver in einem Behälter; und
Formen des erzielten Ventilmetallblocks in einer gewünschten Form, um als das kohlehaltige metallische Material verwendet zu werden.

12. Verfahren zur Herstellung eines metallischen Elektrodenmaterials (1), welches ein kohlehaltiges metallisches Material ist, das ein Ventilmetallmaterial (10) umfasst, wobei zahlreiche Kohlepartikel (2) teilweise in zumindest einer Oberfläche des Ventilmetallmaterials (10) eingebettet sind, wobei die Kohlepartikel (2) von der Oberfläche des Ventilmetallmaterials (10) hervorstehen, um die Kohlepartikel (2) von der Oberfläche freizulegen, wobei das Verfahren einen Kohle-Einbettungsschritt des Hineintreibens der Kohlepartikel (2) in die Oberfläche des Ventilmetallmaterials (10) umfasst, durch das unter Druck setzen der Kohlepartikel (2), die auf der Oberfläche des Ventilmetallmaterials (10) verteilt sind, um das kohlehaltige metallische Material zu erzielen.

13. Verfahren zur Herstellung eines metallischen Elektrodenmaterials (1) nach Anspruch 12, wobei der Kohle-Einbettungsschritt ein Pressverfahren verwendet, bei welchem die Kohlepartikel (2) durch den Gebrauch einer Pressform hineingetrieben werden.

14. Verfahren zur Herstellung eines metallischen Elektrodenmaterials (1) nach Anspruch 12, wobei der Kohle-Einbettungsschritt ein Walzverfahren verwendet, bei welchem die Kohlepartikel (2) durch den Gebrauch einer Walze hineingetrieben werden.

15. Verfahren zur Herstellung eines metallischen Elektrodenmaterials (1) nach Anspruch 12, wobei der Kohle-Einbettungsschritt ausgeführt wird, wenn das Ventilmetallmaterial (10) durch Warmumformung oder Kaltumformung geformt wird.

16. Verfahren zur Herstellung eines metallischen Elektrodenmaterials (1) nach einem der Ansprüche 11 bis 14, wobei das Verfahren einen Schritt der Vergröberung der Oberfläche des kohlehaltigen metallischen Materials umfasst.

17. Verfahren zur Herstellung eines metallischen Elektrodenmaterials (1) nach einem der Ansprüche 11 bis 14, wobei das Verfahren einen weiteren Schritt des Freilegens der Kohlepartikel (2) zur Oberfläche des kohlehaltigen metallischen Materials umfasst, durch ein zusätzliches elektrolytisches Ätzen des kohlehaltigen metallischen Materials in einer säurehaltigen wässrigen Lösung.

18. Verfahren zur Herstellung eines metallischen Elektrodenmaterials (1) nach einem der Ansprüche 11 bis 14, wobei das Verfahren einen Schritt des Freilegens der Kohlepartikel (2) zur Oberfläche des kohlehaltigen metallischen Materials umfasst, durch das Abstrahlen des kohlehaltigen metallischen Materials.

19. Verfahren zur Herstellung eines metallischen Elektrodenmaterials (1) nach Anspruch 17, wobei das Verfahren einen Schritt des Bildens eines Passivfilms auf der metallischen Oberfläche des kohlehaltigen metallischen Materials umfasst, nach dem Schritt des Freilegens der Kohlepartikel (2).

20. Verfahren zur Herstellung eines metallischen Elektrodenmaterials (1) nach einem der Ansprüche 11 bis 14, wobei das Ventilmetallmaterial (10) eines ist von Tantal, Aluminium, Titan, Niobium, Zirkonium, Wismut, Silizium, Hafnium, eine auf Titan basierende Legierung, die Bor und Zinn beinhaltet, eine auf Titan basierende Legierung, die Chrom und Vanadium beinhaltet, eine auf Titan basierende Legierung, die Vanadium und Antimon beinhaltet, und eine auf Aluminium basierende Legierung, die Titan beinhaltet.

21. Verfahren zur Herstellung eines metallischen Elektrodenmaterials (1) nach einem der Ansprüche 11 bis 14, wobei die Kohlepartikel (2) aus leitfähigen Kohlepartikeln (2) gebildet sind, so wie Graphit oder Ruß.

22. Verfahren zur Herstellung eines metallischen Elektrodenmaterials (1) nach einem der Ansprüche 11 bis 14, wobei die Kohlepartikel (2) Aktivkohlepartikel (2) sind.

23. Verfahren zur Herstellung eines metallischen Elektrodenmaterials (1) nach einem der Ansprüche 11 bis 14, wobei die Kohlepartikel (2) einen Durchmesser in dem Bereich von 0,01 bis 50 *µ*m aufweisen.

24. Verfahren zur Herstellung eines metallischen Elektrodenmaterials (1) nach einem der Ansprüche 11 bis 14, wobei die Kohlepartikel (2) entweder eine korpuskulare, gekörnte oder faserige Form aufweisen.

25. Kondensator, der ein Paar Elektroden und nichtwässriges Elektrolyt einschließt, wobei zumindest eine Elektrode ein metallisches Elektrodenmaterial (1) umfasst, das ein kohlehaltiges metallisches Material ist, welches ein Ventilmetallmaterial (10) und zahlreiche Kohlepartikel (2) umfasst, die durch das Hineintreiben der zahlreichen Kohlepartikel (2) in die Oberfläche des Ventilmetallmaterials (10) teilweise in der Oberfläche des Ventilmetallmaterials (10) eingebettet sind und von der Oberfläche des Ventilmetallmaterials (10) hervorstehen, um die Kohlepartikel (2) von der Oberfläche freizulegen.

26. Kondensator nach Anspruch 25, wobei der Kondensator ein elektrischer Doppelschicht-Kondensator ist, und das Paar Elektroden aus elektrischen Doppelschicht-Elektroden (3) gebildet ist, von denen jede das kohlehaltige metallische Material enthält, und einer Aktivkohleschicht (30), die auf der Oberfläche des metallischen Materials in Kontakt mit den Kohlepartikeln (2) gebildet ist.

27. Kondensator nach Anspruch 26, wobei das Ventilmetallmaterial (10) eine flexible Schicht darstellt, das Paar elektrischer Doppelschicht-Elektroden (3) einander gegenüber, mit einem dazwischen angeordneten Separator und in einem gewundenen Zustand eingerichtet ist, und in einem Behälter eingeschlossen ist, um einen elektrischen Doppelschicht-Kondensator des gewundenen Typs zu erzielen.

28. Kondensator nach Anspruch 26, wobei die Aktivkohleschichten (30) des Paares elektrischer Doppelschicht-Elektroden (3) in einem Behälter mit einem dazwischen angeordneten Separator untergebracht sind, und die Ventilmetallmaterialien (10) der Elektroden in dem metallischen Deckel und den Bodenabschnitten eines Behälters untergebracht sind, die gekoppelt sind, um voneinander abgetrennt zu sein.

29. Kondensator nach Anspruch 28, wobei der metallische Deckel und die Bodenabschnitte des Behälters mit den Ventilmetallmaterialien (10) plattiert sind.

30. Kondensator nach Anspruch 25, wobei der Kondensator ein Elektrolytkondensator ist, eines der metallischen Elektrodenmaterialien (1) als die Kathode verwendet wird, und das andere metallische Elektrodenmaterial (1), das eine dielektrische Isolierschicht (4) aufweist, als die Anode verwendet wird.

31. Kondensator nach einem der Ansprüche 25 bis 30, wobei das Ventilmetallmaterial (10) eines ist von Tantal, Aluminium, Titan, Niobium, Zirkonium, Wismut, Silizium, Hafnium, eine auf Titan basierende Legierung, die Bor und Zinn beinhaltet, eine auf Titan basierende Legierung, die Chrom und Vanadium beinhaltet, eine auf Titan basierende Legierung, die Vanadium und Antimon beinhaltet, und eine auf Aluminium basierende Legierung, die Titan beinhaltet.

32. Kondensator nach einem der Ansprüche 25 bis 30, wobei die Kohlepartikel (2) aus leitfähigen Kohlepartikeln (2) gebildet sind, so wie Graphit oder Ruß.

33. Kondensator nach einem der Ansprüche 25 bis 30, wobei die Kohlepartikel (2) Aktivkohlepartikel (2) sind.

34. Kondensator nach einem der Ansprüche 25 bis 30, wobei die Kohlepartikel (2) einen Durchmesser in dem Bereich von 0,01 bis 50 µm aufweisen.

35. Kondensator nach einem der Ansprüche 25 bis 30, wobei die Kohlepartikel (2) entweder eine korpuskulare, gekörnte oder faserige Form aufweisen.

36. Kondensator nach einem der Ansprüche 25 bis 30; wobei ein Passivfilm auf der metallischen Oberfläche des Ventilmetallmaterials (10) gebildet ist.

37. Verfahren zur Herstellung eines elektrischen Doppelschicht-Kondensators, welcher ein Paar elektrischer Doppelschicht-Elektroden (3) umfasst, die jeweils aus einer Aktivkohleschicht (30) gebildet sind, die auf der Oberfläche eines Ventilmetallmaterials (10) gebildet ist, einen Separator zum voneinander Abtrennen des Paares elektrischer Doppelschicht-Elektroden (3) sowie nichtwässriges Elektrolyt, wobei das Verfahren die folgenden Schritte umfasst:
Bilden eines kohlehaltigen metallischen Elektrodenmaterials (1) nach Anspruch 1;
Auftragen einer Aktivkohlepartikel (2) enthaltenden Masse auf die Oberfläche des kohlehaltigen metallischen Elektrodenmaterials (1); und
Trocknen und Aushärten der Masse, um die elektrischen Doppelschicht-Elektroden (3) zu erzielen.

38. Verfahren zur Herstellung eines Kondensators nach Anspruch 37, wobei - nach dem Schritt des Bildens des kohlehaltigen metallischen Materials - das Verfahren außerdem einen Schritt des Freilegens der Kohlepartikel (2) zur Oberfläche des metallischen Materials umfasst, durch ein elektrolytisches Ätzen des metallischen Materials in einer säurehaltigen wässrigen Lösung.

39. Verfahren zur Herstellung eines elektrischen Doppelschicht-Kondensators des Druckknopf-Typs, bei dem ein Paar elektrischer Doppelschicht-Elektroden (3) - die jeweils eine Aktivkohleschicht (30) aufweisen, die nach Anspruch 1 auf der Oberfläche eines Elektrodenmetallmaterials (1) gebildet ist - in einem Behälter untergebracht ist, wobei die Aktivkohleschichten (30) über einen dazwischen angeordneten Separator geschichtet sind, und die metallischen Elektrodenmaterialien (1) mit dem metallischen Deckel und den Bodenabschnitten des Behälters gekoppelt sind, wobei beide Abschnitte einen voneinander abgetrennten Zustand aufweisen, wobei das Verfahren die folgenden Schritte umfasst:
Bilden des kohlehaltigen metallischen Elektrodenmaterials (1); und
Auftragen der Aktivkohleschichten (30) auf die Oberflächen der Ventilmetallmaterialien (10), um die elektrischen Doppelschicht-Elektroden (3) zu erzielen.

40. Verfahren zur Herstellung eines elektrischen Doppelschicht-Kondensators nach Anspruch 39, einschließlich eines Schrittes des vorhergehenden Ausführens des Plattierens des metallischen Bodenabschnitts des Behälters mit den Ventilmetallmaterialien (10), um eine Integration auszuführen.

41. Verfahren zur Herstellung eines Elektrolytkondensators, bei dem eine Anode, die aus einem Ventilmetallmaterial (10) gebildet ist, das eine dielektrische Isolierschicht (4) auf dessen Oberfläche aufweist, und eine Kathode, die aus einem Ventilmetallmaterial (10) gebildet ist, einander gegenüber in einem nichtwässrigen Elektrolyt angeordnet sind, wobei das Verfahren einen folgenden Schritt aufweist:
Bilden eines kohlehaltigen metallischen Elektrodenmaterials (1) nach Anspruch 1, wobei das kohlehaltige metallische Material als das metallische Elektrodenmaterial (1) für die Kathode verwendet wird.

42. Verfahren zur Herstellung eines Kondensators nach Anspruch 37, 39 oder 41, wobei der Schritt des Bildens des kohlehaltigen metallischen Materials einen Kohle-Einbettungsschritt des Hineintreibens der Kohlepartikel (2) in die Oberfläche des Ventilmetallmaterials (10) umfasst, durch das unter Druck setzen der Kohlepartikel (2), die auf der Oberfläche des Ventilmetallmaterials (10) verteilt sind, um das kohlehaltige metallische Material zu erzielen.

43. Verfahren zur Herstellung eines Kondensators nach Anspruch 42, wobei der Kohle-Einbettungsschritt ein Pressverfahren verwendet, bei welchem die Kohlepartikel (2) durch den Gebrauch einer Pressform hineingetrieben werden.

44. Verfahren zur Herstellung eines Kondensators nach Anspruch 42, wobei der Kohle-Einbettungsschritt ein Walzverfahren verwendet, bei welchem die Kohlepartikel (2) durch den Gebrauch von Walzen hineingetrieben werden.

45. Verfahren zur Herstellung eines Kondensators nach Anspruch 43 oder 44, wobei der Kohle-Einbettungsschritt in einem Arbeitschritt der Warmumformung oder Kaltumformung ausgeführt wird, um das Ventilmetallmaterial (10) zu bilden.

46. Verfahren zur Herstellung eines Kondensators nach Anspruch 42, wobei das Verfahren einen Schritt der Vergröberung der Oberfläche des kohlehaltigen metallischen Materials umfasst.

47. Verfahren zur Herstellung eines Kondensators nach Anspruch 42, wobei das Verfahren außerdem einen Schritt des Freilegens der Kohlepartikel (2) zur Oberfläche des kohlehaltigen metallischen Materials umfasst, durch ein elektrolytisches Ätzen der Oberfläche des kohlehaltigen metallischen Materials in einer säurehaltigen wässrigen Lösung.

48. Verfahren zur Herstellung eines Kondensators nach einem der Ansprüche 43 bis 45, wobei das Verfahren ferner einen Schritt des Freilegens der Kohlepartikel (2) zur Oberfläche des kohlehaltigen metallischen Materials umfasst, durch das Abstrahlen des kohlehaltigen metallischen Materials.

49. Verfahren zur Herstellung eines Kondensators nach Anspruch 47, wobei das Verfahren ferner einen Schritt des Bildens eines Passivfilms auf der metallischen Oberfläche des kohlehaltigen metallischen Materials umfasst, nach dem Schritt des Freilegens der Kohlepartikel (2).

50. Verfahren zur Herstellung eines Kondensators nach einem der Ansprüche 43 bis 45, wobei das Ventilmetallmaterial (10) eines ist von Tantal, Aluminium, Titan, Niobium, Zirkonium, Wismut, Silizium, Hafnium, eine auf Titan basierende Legierung, die Bor und Zinn beinhaltet, eine auf Titan basierende Legierung, die Chrom und Vanadium beinhaltet, eine auf Titan basierende Legierung, die Vanadium und Antimon beinhaltet, und eine auf Aluminium basierende Legierung, die Titan beinhaltet.

51. Verfahren zur Herstellung eines Kondensators nach einem der Ansprüche 43 bis 45, wobei die Kohlepartikel (2) aus leitfähigen Kohlepartikeln (2) gebildet sind, so wie Graphit oder Ruß.

## Revendications

1. Matériau métallique pour électrode (1) destiné à être utilisé dans une structure d'électrodes en contact avec un électrolyte non aqueux, dans lequel le matériau métallique pour électrode (1) est un matériau métallique carboné comprenant un matériau métallique pour soupape (10) et de nombreuses particules de carbone (2) partiellement enrobées dans une surface du matériau métallique pour soupape (10) en entraînant lesdites nombreux particules de carbone (2) dans ladite surface du matériau métallique pour soupape (10) et projetées de la surface dudit matériau métallique pour soupape (10) afin d'exposer lesdites particules de carbone (2) par rapport à cette surface.

2. Matériau métallique pour électrode (1) selon la revendication 1, dans lequel la surface métallique dudit matériau métallique carboné est revêtue d'un film passif.

3. Matériau métallique pour électrode (1) selon la revendication 1, dans lequel ledit matériau métallique pour électrode (1) est revêtu d'une couche de carbone activé (30) pour former une électrode en double couche (3) pour un condensateur à double couche électrique.

4. Matériau métallique pour électrode (1) selon la revendication 1, dans lequel ledit matériau métallique pour électrode (1) est une cathode d'un condensateur électrolytique, faisant contact avec l'électrolyte non aqueux.

5. Matériau métallique pour électrode (1) selon l'une quelconque des revendications 1 à 4, dans lequel ledit matériau métallique pour électrode (1) est une feuille mince.

6. Matériau métallique pour électrode (1) selon l'une quelconque des revendications 1 à 4, dans lequel ledit matériau métallique pour soupape (10) en est un qui est sélectionné parmi le tantale, l'aluminium, le titane, le niobium; le zirconium, le bismuth, le silicium, l'hafnium, un alliage à base de titane contenant le bore et l'étain, un alliage à base de titane contenant le chrome et le vanadium, un alliage à base de titane contenant le vanadium et l'antimoine et un alliage à base d'aluminium contenant le titane.

7. Matériau métallique pour électrode (1) selon l'une quelconque des revendications 1 à 4, dans lequel lesdites particules de carbone (2) sont formées de particules de carbone conductrices (2), telles que le graphite ou le noir de carbone.

8. Matériau métallique pour électrode (1) selon l'une quelconque des revendications 1 à 4, dans lequel lesdites particules de carbone (2) sont des particules de carbone activé (2).

9. Matériau métallique pour électrode (1) selon l'une quelconque des revendications 1 à 4, dans lequel lesdites particules de carbone (2) ont un diamètre dans la plage de 0,01 µm à 50 µm.

10. Matériau métallique pour électrode (1) selon l'une quelconque dés revendications 1 à 4, dans lequel lesdites particules de carbone (2) ont l'une des formes particulaire, granulée et fibreuse.

11. Procédé de production d'un matériau métallique pour électrode (1), qui est un matériau métallique carboné comprenant un matériau métallique pour soupape (10) et de nombreuses particules de carbone (2) partiellement enrobées dans au moins une surface dudit matériau métallique pour soupape (10) et projetées de ladite surface dudit matériau métallique pour soupape (10) afin d'exposer lesdites particules de carbone (2) par rapport à ladite surface, dans lequel ledit procédé comprend les étapes consistant à :
inclure lesdites particules de carbone (2) dans un lingot de métal pour soupape par chauffage et mise sous pression d'un mélange de poudre du métal pour soupape et de poudre de carbone dans un récipient ; et
donner audit lingot de métal pour soupape résultant la forme souhaitée pour qu'il soit utilisé comme étant ledit matériau métallique carboné.

12. Procédé de production d'un matériau métallique pour électrode (1), qui est un matériau métallique carboné comprenant un matériau métallique pour soupape (10) et de nombreuses particules de carbone partiellement enrobées (2) dans au moins une surface du matériau métallique pour soupape (10), lesdites particules de carbone (2) projetées de la surface dudit matériau métallique pour soupape (10) pour exposer lesdites particules de carbone (2) par rapport à ladite surface, dans lequel ledit procédé comprend une étape d'enrobage de carbone consistant à entraîner les particules de carbone (2) dans la surface dudit matériau métallique pour soupape (10) par mise sous pression desdites particules de carbone (2) dispersées sur la surface dudit matériau métallique pour soupape (10) afin d'obtenir ledit matériau métallique carboné.

13. Procédé de production d'un matériau métallique pour électrode (1) selon la revendication 12, dans lequel ladite étape d'enrobage de carbone utilise un procédé à la presse dans lequel lesdites particules de carbone (2) sont entraînées à l'aide d'une matrice.

14. Procédé de production d'un matériau métallique pour électrode (1) selon la revendication 12, dans lequel ladite étape d'enrobage de carbone utilise un procédé au rouleau dans lequel lesdites particules de carbone (2) sont entraînées à l'aide d'un rouleau.

15. Procédé de production d'un matériau métallique pour électrode (1) selon la revendication 12, dans lequel ladite étape d'enrobage de carbone est exécutée lorsque ledit matériau métallique pour soupape (10) est formé par formage à chaud ou à froid.

16. Procédé de production d'un matériau métallique pour électrode (1) selon l'une quelconque des revendications 11 à 14, dans lequel le procédé comporte l'étape consistant à rendre plus grossière la surface dudit matériau métallique carboné.

17. Procédé de production d'un matériau métallique pour électrode (1) selon l'une quelconque des revendications 11 à 14, dans lequel le procédé comprend une étape supplémentaire consistant à exposer lesdites particules de carbone (2) à la surface dudit matériau métallique carboné en soumettant à une attaque électrolytique ledit matériau métallique carboné dans une solution aqueuse acide.

18. Procédé de production d'un matériau métallique pour électrode (1) selon l'une quelconque des revendications 11 à 14, dans lequel le procédé comprend une étape consistant à exposer lesdites particules de carbone (2) à la surface dudit matériau métallique carboné en soumettant ledit matériau métallique carboné à une projection.

19. Procédé de production d'un matériau métallique pour électrode (1) selon la revendication 17, dans lequel le procédé comprend une étape consistant à former un film passif sur la surface métallique dudit matériau métallique carboné après ladite étape d'exposition desdites particules de carbone (2).

20. Procédé de production d'un matériau métallique pour électrode (1) selon l'une quelconque des revendications 11 à 14, dans lequel ledit matériau métallique pour soupape (10) en est un qui est sélectionné parmi le tantale, l'aluminium, le titane, le niobium; le zirconium, le bismuth, le silicium, l'hafnium, un alliage à base de titane contenant le bore et l'étain, un alliage à base de titane contenant le chrome et le vanadium, un alliage à base de titane contenant le vanadium et l'antimoine et un alliage à base d'aluminium contenant le titane.

21. Procédé de production d'un matériau métallique pour électrode (1) selon l'une quelconque des revendications 11 à 14, dans lequel lesdites particules de carbone (2) sont formées de particules de carbone conductrices (2), telles que le graphite ou le noir de carbone.

22. Procédé de production d'un matériau métallique pour électrode (1) selon l'une quelconque des revendications 11 à 14, dans lequel lesdites particules de carbone (2) sont des particules de carbone activé (2).

23. Procédé de production d'un matériau métallique pour électrode (1) selon l'une quelconque des revendications 11 à 14, dans lequel le diamètre desdites particules de carbone (2) est situé dans la plage de 0,01 µm à 50 µm.

24. Procédé de production d'un matériau métallique pour électrode (1) selon l'une quelconque des revendications 11 à 14, dans lequel lesdites particules de carbone (2) ont l'une des formes particulaire, granulée et fibreuse.

25. Condensateur comprenant une paire d'électrodes et un électrolyte non aqueux, dans lequel au moins une électrode comprend un matériau métallique pour électrode (1) qui est un matériau métallique carboné comprenant un matériau métallique pour soupape (10) et de nombreuses particules de carbone (2) partiellement enrobées dans la surface dudit matériau métallique pour soupape (10) en entraînant lesdites nombreuses particules de carbone (2) dans ladite surface du matériau métallique pour soupape (10) et projetées de ladite surface dudit matériau métallique pour soupape (10) afin d'exposer lesdites particules de carbone (2) par rapport à ladite surface.

26. Condensateur selon la revendication 25, dans lequel ledit condensateur est un condensateur électrique, et ladite paire d'électrodes est formée d'électrodes en double couche électrique (3) comprenant chacune ledit matériau métallique carboné et une couche de carbone activé (30) formée en contact avec lesdites particules de carbone (2) sur la surface dudit matériau métallique.

27. Condensateur selon la revendication 26, dans lequel ledit matériau métallique pour soupape (10) est une feuille souple, ladite paire d'électrodes en double couche électrique (3) est déposée face à face avec un séparateur entre elles et enroulée, et enfermée dans un récipient pour obtenir un condensateur à double couche électrique du type à enroulement.

28. Condensateur selon la revendication 26, dans lequel lesdites couches de carbone activé (30) de ladite paire d'électrodes en double couche électrique (3) sont reçues dans un récipient avec un séparateur entre elles, et lesdits matériaux métalliques pour soupape (10) desdites électrodes sont reçus dans les parties couvercle et fond métalliques d'un récipient, qui sont couplées de sorte à être isolées l'une de l'autre.

29. Condensateur selon la revendication 28, dans lequel lesdites parties couvercle et fond métalliques dudit récipient sont recouvertes desdits matériaux métalliques pour soupape (10).

30. Condensateur selon la revendication 25, dans lequel ledit condensateur est une condensateur électrolytique, l'un desdits matériaux métalliques pour électrode (1) est utilisé comme étant la cathode, et l'autre matériau métallique pour électrode (1) ayant un film isolant diélectrique (4) est utilisé comme étant l'anode.

31. Condensateur selon l'une quelconque des revendications 25 à 30, dans lequel ledit matériau métallique pour soupape (10) en est un qui est sélectionné parmi le tantale, l'aluminium, le titane, le niobium; le zirconium, le bismuth, le silicium, l'hafnium, un alliage à base de titane contenant le bore et l'étain, un alliage à base de titane contenant le chrome et le vanadium, un alliage à base de titane contenant le vanadium et l'antimoine et un alliage à base d'aluminium contenant le titane.

32. Condensateur selon l'une quelconque des revendications 25 à 30, dans lequel lesdites particules de carbone (2) sont formées de particules de carbone conductrices (2), telles que le graphite ou le noir de carbone.

33. Condensateur selon l'une quelconque des revendications 25 à 30, dans lequel lesdites particules de carbone (2) sont des particules de carbone activé (2).

34. Condensateur selon l'une quelconque des revendications 25 à 30, dans lequel le diamètre desdites particules de carbone (2) est situé dans la plage de 0,01 µm à 50 µm.

35. Condensateur selon l'une quelconque des revendications 25 à 30, dans lequel lesdites particules de carbone (2) ont l'une des formes particulaire, granulée et fibreuse.

36. Condensateur selon l'une quelconque des revendications 25 à 30, dans lequel un film passif est formé sur la surface métallique dudit matériau métallique pour soupape (10).

37. Procédé de production d'un condensateur à double couche électrique comprenant une paire d'électrodes en double couche électrique (3) formées chacune d'une couche de carbone activé (30) formée sur la surface d'un matériau métallique pour soupape (10), un séparateur pour séparer ladite paire d'électrodes en double couche électrique (3) et un électrolyte non aqueux, dans lequel ledit procédé comprend les étapes consistant à :
former un matériau métallique carboné pour électrode (1) selon la revendication 1 ;
appliquer une pâte contenant des particules de carbone activé (2) à la surface dudit matériau métallique carboné pour électrode (1) ; et
sécher et cuire ladite pâte afin d'obtenir lesdites électrodes en double couche électrique (3).

38. Procédé de production d'un condensateur selon la revendication 37, dans lequel, après l'étape consistant à former ledit matériau métallique carboné, ledit procédé comprend en outre une étape consistant à exposer lesdites particules de carbone (2) sur la surface dudit matériau métallique carboné en soumettant à une attaque électrolytique ledit matériau métallique dans une solution aqueuse acide.

39. Procédé de production d'un condensateur à double couche électrique du type bouton dans lequel une paire d'électrodes en double couche électrique (3), ayant chacune une couche de carbone activé (30) formée sur la surface d'un matériau métallique pour électrode (1) selon la revendication 1, est reçue dans un récipient avec les couches de carbone activé (30) stratifiées via un séparateur entre elles, et lesdits matériaux métalliques pour électrode (1) sont accouplés aux parties couvercle et fond métalliques du récipient, les deux parties étant isolées l'une de l'autre, dans lequel ledit procédé comprend les étapes consistant à:
former ledit matériau métallique carboné pour électrode (1); et
appliquer les couches de carbone activé (30) aux surfaces des matériaux métalliques pour soupape (10) afin d'obtenir les électrodes en double couche électrique (3).

40. Procédé de production d'un condensateur à double couche électrique selon la revendication 39, comportant une étape consistant à effectuer préalablement un revêtement de la partie fond métallique dudit récipient avec lesdits matériaux métalliques pour soupape (10) de sorte à réaliser l'intégration.

41. Procédé de production d'un condensateur électrolytique dans lequel une anode formée d'un matériau métallique pour soupape (10) ayant un film isolant diélectrique (4) sur la surface de celle-ci et une cathode formée d'un matériau métallique pour soupape (10) sont placées face à face dans un électrolyte non aqueux, dans lequel ledit procédé comprend une étape consistant à
former un matériau métallique carboné pour électrode (1) selon la revendication 1, par lequel le matériau métallique carboné est utilisé comme étant le matériau métallique pour électrode (1) pour la cathode.

42. Procédé de production d'un condensateur selon la revendication 37, 39 ou 41, dans lequel ladite étape consistant à former le matériau métallique carboné comprend une étape d'enrobage de carbone consistant à entraîner les particules de carbone (2) dans la surface dudit matériau métallique pour soupape (10) par mise sous pression desdites particules de carbone (2) dispersées sur la surface dudit matériau métallique pour soupape (10) afin d'obtenir le matériau métallique carboné.

43. Procédé de production d'un condensateur selon la revendication 42, dans lequel ladite étape d'enrobage de carbone utilise un procédé à la presse dans lequel lesdites particules de carbone (2) sont entraînées à l'aide d'une matrice.

44. Procédé de production d'un condensateur selon la revendication 42, dans lequel ladite étape d'enrobage de carbone utilise un procédé au rouleau dans lequel les particules de carbone (2) sont entraînées à l'aide de rouleaux.

45. Procédé de production d'un condensateur selon la revendication 43 ou 44, dans lequel ladite étape d'enrobage de carbone est exécutée dans une étape de formage à chaud ou à froid pour former le matériau métallique pour soupape (10).

46. Procédé de production d'un condensateur selon la revendication 42, comportant une étape consistant à rendre plus grossière la surface dudit matériau métallique carboné.

47. Procédé de production d'un condensateur selon la revendication 42, dans lequel le procédé comprend en outre une étape consistant à exposer lesdites particules de carbone (2) à la surface du matériau métallique carboné en soumettant à une attaque électrolytique la surface du matériau métallique carboné dans une solution aqueuse acide.

48. Procédé de production d'un condensateur selon l'une quelconque des revendications 43 à 45, dans lequel le procédé comprend en outre une étape consistant à exposer lesdites particules de carbone (2) à la surface du matériau métallique carboné en soumettant le matériau métallique carboné à une projection.

49. Procédé de production d'un condensateur selon la revendication 47, dans lequel le procédé comprend en outre une étape consistant à former un film passif sur la surface métallique du matériau métallique carboné après ladite étape d'exposition de particules de carbone (2).

50. Procédé de production d'un condensateur selon l'une quelconque des revendications 43 à 45, dans lequel ledit matériau métallique pour soupape (10) en est un qui est sélectionné parmi le tantale, l'aluminium, le titane, le niobium; le zirconium, le bismuth, le silicium, l'hafnium, un alliage à base de titane contenant le bore et l'étain, un alliage à base de titane contenant le chrome et le vanadium, un alliage à base de titane contenant le vanadium et l'antimoine et un alliage à base d'aluminium contenant le titane.

51. Procédé de production d'un condensateur selon l'une quelconque des revendications 43 à 45, dans lequel lesdites particules de carbone (2) sont formées de particules de carbone conductrices (2), telles que le graphite ou le noir de carbone.
